# EUROPEAN PATENT SPECIFICATION

(11) **EP 3 979 780 B1**
(45) Date of publication and mention of the grant of the patent: **14.05.2025**
(21) Application number: 20716212.4
(22) Date of filing: 17.03.2020
(51) Int. Cl.: A01B 49/02, A01B 63/32, A01B 79/00, G06Q 50/02

(54) **METHODS OF OPERATING TILLAGE IMPLEMENTS**
VERFAHREN ZUM BETRIEB VON BODENBEARBEITUNGSGERÄTEN
PROCÉDÉS DE FONCTIONNEMENT D'OUTILS DE TRAVAIL DU SOL

(30) Priority: 10.06.2019 US 201962859407 P
(43) Date of publication of application: 13.04.2022
(73) Proprietor: Agco Corporation, Duluth, Georgia 30096 (US)
(72) Inventor: CORPSTEIN, Keith Robert, Hesston, Kansas 67062 (US); BRINKER, Jarret Lee, Hesston, Kansas 67062 (US)
(74) Representative: AGCO Intellectual Property Department
(86) International application number: PCT/IB2020/052419
(87) International publication number: WO 2020/250043

(56) References cited:
- WO-A1-2017/005263
- US-A- 6 041 582
- US-A1- 2012 048 160
- US-A1- 2018 160 613
- US-A1- 2018 168 094

## Description

### FIELD

Embodiments of the present disclosure relate to working agricultural fields. More particularly, embodiments of the present disclosure relate to methods for adjusting tillage implements based on maps.

### BACKGROUND

Crop yields are affected by a variety of factors, such as seed placement, soil quality, weather, irrigation, and nutrient applications. Soil compaction affects how seeds are placed, as well as how water and fertilizer permeates the soil. Typically, a field includes a layer of soil below the surface that is harder and denser than soil above or below it. This layer is referred to in the art as a "compaction layer." The compaction layer is generally less permeable to air and water than the surrounding soil. Roots forming from seeds planted above the compaction layer may grow downward toward the compaction layer, and may then tend to grow outward if they cannot break through the compaction layer. The depth of the compaction layer typically varies throughout a field.

In some fields and with some crops, it is desirable to till through the compaction layer before planting to enable crops roots to grow deeper and more uniformly. However, tilling deeper requires increased fuel usage and exposes more soil to moisture loss. Furthermore, over-tilling of soil, particularly if the soil is prone to erosion, can cause erosion of the soil. Methods of measuring soil compaction are described in U.S. Patent 6,834,550, "Soil Profile Force Measurement Using an Instrumented Tine," issued December 28, 2004.

U.S. Patent 6,041,582, "System for Recording Soil Conditions" discloses a system in which sensors are used to detect load on a soil working tool due to soil compaction. A location signal generation circuit generates signals relating to the location at which the force signal is sampled. The force data is correlated with the locations at which the force was sampled. The correlated data is saved and may be used to generate a field map indicating soil condition values to aid in locating where various farming materials should be applied to the soil.

### BRIEF SUMMARY

In accordance with an aspect of the invention, there is provided a method of operating a tillage implement as defined in claim 1. Further optional features of the method according to claim 1 are set out in the claims dependent on claim 1

In accordance with a further aspect of the invention, there is provided a non-transitory computer-readable storage medium including instructions as defined in claim 11. Further optional features of the non-transitory computer-readable storage medium according to claim 11 are set out in the claims dependent on claim 11.

### BRIEF DESCRIPTION OF THE DRAWINGS

While the specification concludes with claims particularly pointing out and distinctly claiming what are regarded as embodiments of the present invention, various features and advantages of embodiments of the invention may be more readily ascertained from the following description of example embodiments when read in conjunction with the accompanying drawings, in which:
FIG. 1 is a simplified top view of a tractor pulling a tillage implement that may be operated as disclosed herein;
FIG. 2 illustrates a map 200 that may be used in the methods disclosed;
FIG. 3 is a simplified flowchart illustrating a method of operating tillage implements; and
FIG. 4 illustrates an example computer-readable storage medium comprising processor-executable instructions configured to embody one or more of the methods of operating tillage implements, such as the method illustrated in FIG. 3.

### DETAILED DESCRIPTION

The illustrations presented herein are not actual views of any tillage implement or portion thereof, but are merely idealized representations that are employed to describe example embodiments of the present disclosure. Additionally, elements common between figures may retain the same numerical designation.

The following description provides specific details of embodiments of the present disclosure in order to provide a thorough description thereof. However, a person of ordinary skill in the art will understand that the embodiments of the disclosure may be practiced without employing many such specific details. Indeed, the embodiments of the disclosure may be practiced in conjunction with conventional techniques employed in the industry. In addition, the description provided below does not include all elements to form a complete structure or assembly. Only those process acts and structures necessary to understand the embodiments of the disclosure are described in detail below. Additional conventional acts and structures may be used. Also note, the drawings accompanying the application are for illustrative purposes only, and are thus not drawn to scale.

As used herein, the terms "comprising," "including," "containing," "characterized by," and grammatical equivalents thereof are inclusive or open-ended terms that do not exclude additional, unrecited elements or method steps, but also include the more restrictive terms "consisting of" and "consisting essentially of" and grammatical equivalents thereof.

As used herein, the term "may" with respect to a material, structure, feature, or method act indicates that such is contemplated for use in implementation of an embodiment of the disclosure, and such term is used in preference to the more restrictive term "is" so as to avoid any implication that other, compatible materials, structures, features, and methods usable in combination therewith should or must be excluded.

As used herein, the term "configured" refers to a size, shape, material composition, and arrangement of one or more of at least one structure and at least one apparatus facilitating operation of one or more of the structure and the apparatus in a predetermined way.

As used herein, the singular forms following "a," "an," and "the" are intended to include the plural forms as well, unless the context clearly indicates otherwise.

As used herein, the term "and/or" includes any and all combinations of one or more of the associated listed items.

As used herein, spatially relative terms, such as "beneath," "below," "lower," "bottom," "above," "upper," "top," "front," "rear," "left," "right," and the like, may be used for ease of description to describe one element's or feature's relationship to another element(s) or feature(s) as illustrated in the figures. Unless otherwise specified, the spatially relative terms are intended to encompass different orientations of the materials in addition to the orientation depicted in the figures.

As used herein, the term "substantially" in reference to a given parameter, property, or condition means and includes to a degree that one of ordinary skill in the art would understand that the given parameter, property, or condition is met with a degree of variance, such as within acceptable manufacturing tolerances. By way of example, depending on the particular parameter, property, or condition that is substantially met, the parameter, property, or condition may be at least 90.0% met, at least 95.0% met, at least 99.0% met, or even at least 99.9% met.

As used herein, the term "about" used in reference to a given parameter is inclusive of the stated value and has the meaning dictated by the context *(e.g.,* it includes the degree of error associated with measurement of the given parameter).

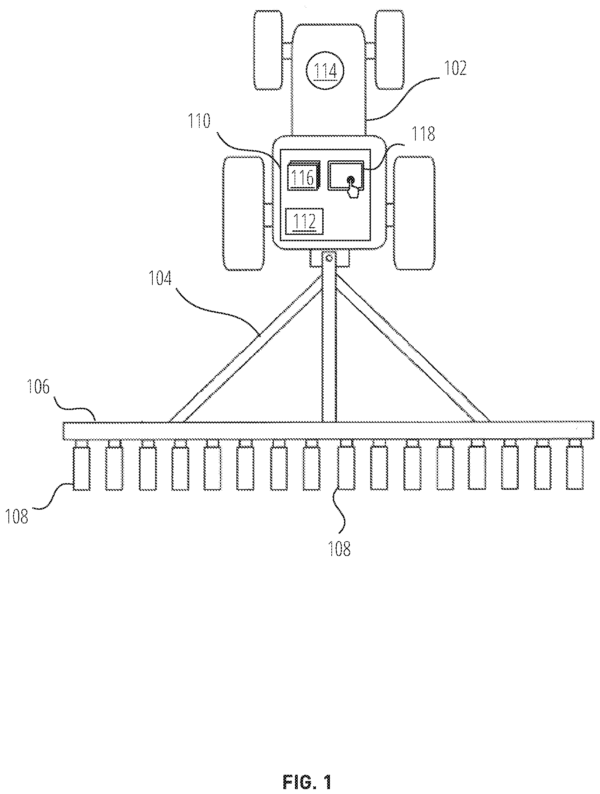

FIG. 1 is a simplified top view illustrating a tractor 102 drawing a tillage implement 104, which includes a frame 106 supporting multiple tilling tools 108. A computer 110, which may include a processor 112, memory, and graphical user interface ("GUI") 118 (*e.g.,* a touch-screen interface), is typically located in the cab of the tractor 102. A global positioning system ("GPS") receiver 114 may be mounted to the tractor 102 and connected to communicate with the processor 112. The processor 112 may be configured to communicate with the tilling tools 108. The processor 112 may communicate by wired or wireless communication.

The processor 112 may be configured to adjust operating parameters of the tillage implement 104, store and retrieve information in a data storage device 116, and/or display information on the graphical user interface 118 (depicted as a touch-screen, though other types of interface may also be used). The processor 112 may typically adjust the operating parameters of the tillage implement 104 based on known variations of the properties of the field or based on information collected while working the field. For example, the data storage device 116 may store one or more maps containing information about the field, and the processor 112 may adjust the tillage implement 104 based on the position in the field and information from the map(s). The maps may include, for example, topographic or soil-quality maps.

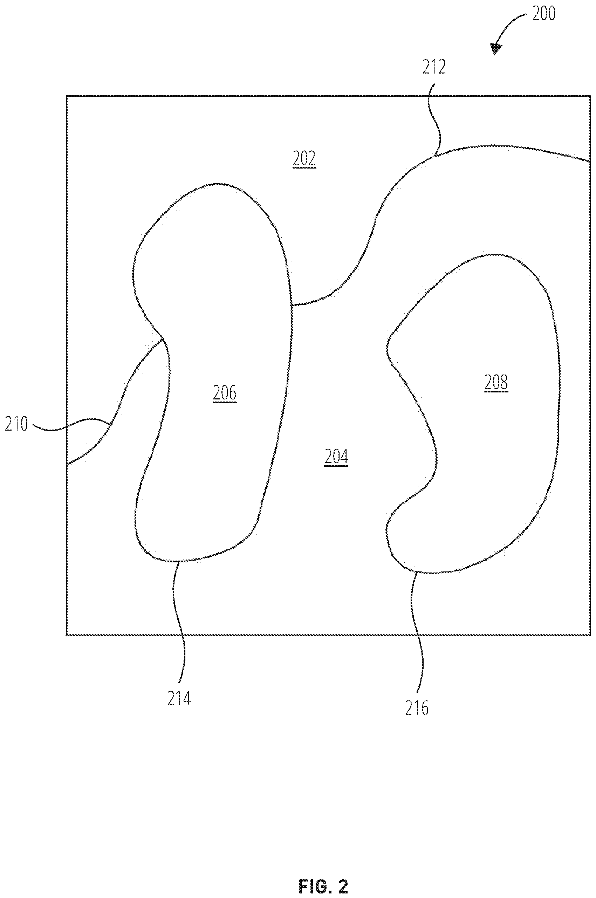

FIG. 2 is a simplified representation of a map 200 of a field. The map 200 may include different areas 202-208 separated by boundaries 210-216. The areas 202-208 may have different soil characteristics, and the boundaries 210-216 may correspond to changes in the soil characteristics of a preselected magnitude. For example, if the map 200 represents the amount of residue over the soil (*i.e.,* plant material that is not mixed into the soil), then the boundaries 210-216 may divide values of residue into different bins, categories, or ranges (*e.g.*, low, medium, and high; specific numerical values; or any other selected classifications). In the map 200, for example, the areas 202 may have low residue, the area 204 may have medium residue, and the areas 206 and 208 may each have high residue. Thus, it may be beneficial to work the areas 202-208 differently. Furthermore, the areas 202-208 may have different soil compositions, such as the amount of organic material, the amount of sand, the amount of clay, *etc.* The map 200 may include any number of areas 202-208 with any selected properties.

The map 200 may include, in addition to or instead of soil characteristics, topographical information. For example, the boundaries 210 and 212 may divide a lower area 202 from a higher area 204, whereas the boundaries 214 and 216 may separate certain areas 206 and 208 of soil having a high tendency to erode. Thus, it may be beneficial to till the area 202 differently than the areas 204-208.

Generation of maps of fields is described generally in U.S. Patent Application Publication 2002/0022929 A1, "System and Method for Creating Field Attribute Maps for Site-Specific Farming," published February 21, 2002; U.S. Patent 6,606,542, "System and Method for Creating Agricultural Decision and Application Maps for Automated Agricultural Machines," issued August 12, 2003; and International Patent Publication WO 2018/080979 A1, "Land Mapping and Guidance System," published May 3, 2018.

Returning to FIG. 1, the computer 110 may correlate information about the field from the map 200 with a location of the tillage implement 104 as determined by the GPS receiver 114. The computer 110 may determine target values of operating parameters for the tillage implement 104 based on the properties of the soil at that particular location. If any operating parameter has a target value different from the current value of that operating parameter, the computer 110 may adjust the tillage implement 104 accordingly. This change typically occurs when the tillage implement 104 crosses the boundaries 210-216.

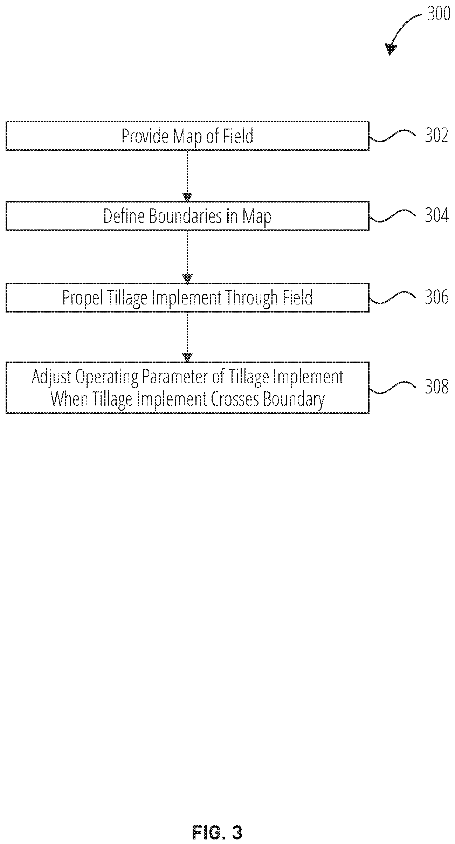

FIG. 3 is a simplified flow chart illustrating a method 300 in which the tractor 102 and the tillage implement 104 (FIG. 1) may be used to work a field.

As depicted in block 302, the method 300 includes providing a map (*e.g*., map 200 in FIG. 2) of a field. As discussed above, the map may be a topographic map, a soil-quality map, a residue map, *etc.* The map may be provided to the computer 110 (FIG. 1) by any method known in the art, such as by transmission via wired or wireless connections, and may be stored in the data storage device 116.

In block 304, the method 300 includes defining boundaries in the map. The boundaries may be defined to separate various areas of the map based on erosion propensity, elevation, or other soil characteristic properties. The boundaries may define different areas in which the tillage implement 104 will have different operating parameters.

In block 306, the method 300 includes propelling the tillage implement 104 through the field. The tillage implement 104 is typically pulled behind the tractor 102.

In block 308, the computer 110 adjusts an operating parameter of the tillage implement 104 (or instructs an actuator or other device to adjust an operating parameter) when the tillage implement 104 crosses a boundary. For example, the computer 110 may adjust a depth of the tillage implement 104 with respect to the surface of the field, an aggressiveness of the tillage implement 104, a rolling basket pressure of the tillage implement 104 (*e.g.,* as described in U.S. Patent 9,635,797, "Actuator Adjusted Rolling Baskets," issued May 2, 2017) or a gang angle of the tillage implement 104 (*e.g.,* as described in International Patent Publication WO 2018/020307 A1, "Tillage Implement Having a Mechanism for Adjusting Disc Blade Angle," published February 1, 2018, and U.S. Patent Publication 2013/0048323, "Tillage Implement with Adjustable Gang Angle," published September 17, 2013).

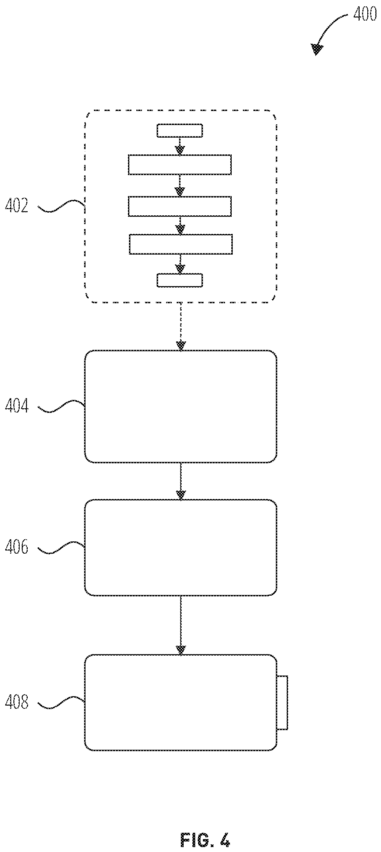

Still other embodiments involve a computer-readable storage medium (*e.g.*, a non-transitory computer-readable storage medium) having processor-executable instructions configured to implement one or more of the techniques presented herein. An example computer-readable medium that may be devised is illustrated in FIG. 4, wherein an implementation 400 includes a computer-readable storage medium 402 (*e.g.,* a flash drive, CD-R, DVD-R, application-specific integrated circuit (ASIC), field-programmable gate array (FPGA), a platter of a hard disk drive, *etc*.), on which is computer-readable data 404. This computer-readable data 404 in turn includes a set of processor-executable instructions 406 configured to operate according to one or more of the principles set forth herein. In some embodiments, the processor-executable instructions 406 may be configured to cause the computer 110 (FIG. 1) to perform operations 408 when executed via a processing unit, such as at least some of the example method 300 depicted in FIG. 3. In other embodiments, the processor-executable instructions 406 may be configured to implement a system, such as at least some of the example tractor 102 and tillage implement 104 (FIG. 1). Many such computer-readable media may be devised by those of ordinary skill in the art that are configured to operate in accordance with one or more of the techniques presented herein.

The apparatus and methods disclosed herein may benefit a farmer by tailoring tilling operations based on different field conditions. Different areas within the field may be worked differently, and therefore the methods may avoid working highly erodible soil too aggressively. Furthermore, if adjusting the tillage implement is automated in a computer, the changes can be implemented more precisely than would be possible if the tractor operator were required to make manual adjustments in the field. Therefore, the end result of the methods may be better consistency of soil conditions after tilling and lower erosion rates. This may translate into higher crop yield and better return-on-investment for the farmer.

While the present invention has been described herein with respect to certain illustrated embodiments, those of ordinary skill in the art will recognize and appreciate that it is not so limited. Rather, many additions, deletions, and modifications to the illustrated embodiments may be made without departing from the scope of the invention as defined in the appended claims, including legal equivalents thereof. Further, embodiments of the disclosure have utility with different and various implement types and configurations.

## Claims

1. A computer implemented method of operating a tillage implement (104), comprising:
providing a map (200) of a field;
defining a plurality of boundaries (210, 212, 214, 216) in the map;
propelling the tillage implement through the field; and
adjusting at least one operating parameter of the tillage implement when the tillage implement crosses a boundary of the plurality;
**characterized in that** defining the boundaries (210, 212, 214, 216) in the map (200) comprises defining the boundaries to separate areas based on elevation or soil characteristic.

2. The method of claim 1, wherein providing the map (200) comprises providing a topographic map of the field.

3. The method of claim 1, wherein providing the map (200) comprises providing a soil map of the field.

4. The method any one of claim 1 through claim 3, wherein providing the map (200) comprises providing the map to a computer (110) carried by a tractor (102) configured to propel the tillage implement (104) through the field.

5. The method of claim 4, wherein adjusting at least one operating parameter of the tillage implement (104) comprises sending an electronic signal from the computer (110) to the tillage implement.

6. The method of any one of claim 1 through claim 3, wherein defining the boundaries (210, 212, 214, 216) in the map comprises defining the boundaries to separate areas (202, 204, 206, 208) based on erosion propensity.

7. The method of any one of claim 1 through claim 3, wherein adjusting at least one operating parameter of the tillage implement (104) comprises adjusting a depth of the tillage implement.

8. The method of any one of claim 1 through claim 3, wherein adjusting at least one operating parameter of the tillage implement (104) comprises adjusting an aggressiveness of the tillage implement.

9. The method of any one of claim 1 through claim 3, wherein adjusting at least one operating parameter of the tillage implement (104) comprises adjusting a rolling basket pressure of the tillage implement.

10. The method of any one of claim 1 through claim 3, wherein adjusting at least one operating parameter of the tillage implement (104) comprises adjusting a gang angle of the tillage implement.

11. A non-transitory computer-readable storage medium (402), the computer-readable storage medium including instructions that when executed by a computer (110) associated with an agricultural tractor (102), cause the agricultural tractor to:
propel a tillage implement (104) through a field; and
adjust at least one operating parameter of the tillage implement when the tillage implement crosses a boundary (210, 212, 214, 216) defined in a map (200);
**characterized in** the boundary corresponding to a soil characteristic or an elevation.

12. The non-transitory computer-readable storage medium (402) of claim 11, further comprising boundaries (210, 212, 214, 216) based on categories of the soil characteristic or elevation.

13. The non-transitory computer-readable storage medium (402) of claim 12, wherein at least some of the boundaries (210, 212, 214, 216) are based on erosion propensity.

14. The non-transitory computer-readable storage medium (402) of claim 12, wherein at least some of the boundaries (210, 212, 214, 216) are based on elevation.

15. The non-transitory computer-readable storage medium (402) of any one of claim 11 through claim 14, wherein the instructions cause the computer (110) to adjust at least one operating parameter selected from the group consisting of a depth of the tillage implement (104), an aggressiveness of the tillage implement, a rolling basket pressure of the tillage implement, and a gang angle of the tillage implement.

## Patentansprüche

1. Computerimplementiertes Verfahren zum Betreiben eines Bodenbearbeitungsgeräts (104), mit:
einem Bereitstellen einer Karte (200) eines Felds;
einem Definieren einer Mehrzahl von Grenzen (210, 212, 214, 216) in der Karte;
einem Antreiben des Bodenbearbeitungsgeräts über das Feld; und
einem Einstellen mindestens eines Betriebsparameters des Bodenbearbeitungsgeräts, wenn das Bodenbearbeitungsgerät eine der mehreren Grenzen kreuzt;
**dadurch gekennzeichnet, dass** das Definieren der Grenzen (210, 212, 214, 216) in der Karte (200) ein Definieren der Grenzen, um Bereiche basierend auf einer Erhebung oder Bodencharakteristik zu trennen, aufweist.

2. Verfahren nach Anspruch 1, wobei das Bereitstellen der Karte (200) ein Bereitstellen einer topografischen Karte des Felds aufweist.

3. Verfahren nach Anspruch 1, wobei das Bereitstellen der Karte (200) ein Bereitstellen einer Bodenkarte des Felds aufweist.

4. Verfahren nach einem der Ansprüche 1 bis 3, wobei das Bereitstellen der Karte (200) ein Bereitstellen der Karte an einen Computer (110) aufweist, der von einem Traktor (102) getragen ist, welcher ausgebildet ist, um das Bodenbearbeitungsgerät (104) über das Feld anzutreiben.

5. Verfahren nach Anspruch 4, wobei das Einstellen des mindestens einen Betriebsparameters des Bodenbearbeitungsgeräts (104) ein Senden eines elektronischen Signals von dem Computer (110) zu dem Bodenbearbeitungsgerät aufweist.

6. Verfahren nach einem der Ansprüche 1 bis 3, wobei das Definieren der Grenzen (210, 212, 214, 216) in der Karte ein Definieren der Grenzen, um Bereiche (202, 204, 206, 208) basierend auf einer Erosionsneigung zu trennen, aufweist.

7. Verfahren nach einem der Ansprüche 1 bis 3, wobei das Einstellen mindestens eines Betriebsparameters des Bodenbearbeitungsgeräts (104) ein Einstellen einer Tiefe des Bodenbearbeitungsgeräts aufweist.

8. Verfahren nach einem der Ansprüche 1 bis 3, wobei das Einstellen mindestens eines Betriebsparameters des Bodenbearbeitungsgeräts (104) ein Einstellen einer Aggressivität des Bodenbearbeitungsgeräts aufweist.

9. Verfahren nach einem der Ansprüche 1 bis 3, wobei das Einstellen mindestens eines Betriebsparameters des Bodenbearbeitungsgeräts (104) ein Einstellen eines Rollkorbdrucks des Bodenbearbeitungsgeräts aufweist.

10. Verfahren nach einem der Ansprüche 1 bis 3, wobei das Einstellen mindestens eines Betriebsparameters des Bodenbearbeitungsgeräts (104) ein Einstellen eines Gangwinkels oder Bodenbearbeitungswerkzeugsatz-Winkels des Bodenbearbeitungsgeräts aufweist.

11. Nichtflüchtiges computerlesbares Speichermedium (402), wobei das computerlesbare Speichermedium Instruktionen umfasst, die, wenn sie durch einen einem landwirtschaftlichen Traktor (102) zugeordneten Computer (110) ausgeführt werden, veranlassen, dass der landwirtschaftliche Traktor:
ein Bodenbearbeitungsgerät (104) über ein Feld antreibt; und
mindestens einen Betriebsparameter des Bodenbearbeitungsgeräts einstellt, wenn das Bodenbearbeitungsgerät eine Grenze (210, 212, 214, 216) kreuzt, die in einer Karte (200) definiert ist;
**dadurch gekennzeichnet, dass** die Grenze zu einer Bodencharakteristik oder einer Erhebung korrespondiert.

12. Nichtflüchtiges computerlesbares Speichermedium (402) nach Anspruch 11, weiterhin mit auf Kategorien der Bodencharakteristik oder Erhebung basierenden Grenzen (210, 212, 214, 216).

13. Nichtflüchtiges computerlesbares Speichermedium (402) nach Anspruch 12, wobei zumindest einige der Grenzen (210, 212, 214, 216) auf einer Erosionsneigung basieren.

14. Nichtflüchtiges computerlesbares Speichermedium (402) nach Anspruch 12, wobei zumindest einige der Grenzen (210, 212, 214, 216) auf einer Erhebung basieren.

15. Nichtflüchtiges computerlesbares Speichermedium (402) nach einem der Ansprüche 11 bis 14, wobei die Instruktionen veranlassen, dass der Computer (110) mindestens einen Betriebsparameter einstellt, der eine Tiefe des Bodenbearbeitungsgeräts (104) und/oder eine Aggressivität des Bodenbearbeitungsgeräts und/oder ein Rollkorbdruck des Bodenbearbeitungsgeräts und/oder ein Gangwinkel oder Bodenbearbeitungswerkzeugsatz-Winkel des Bodenbearbeitungsgeräts ist.

## Revendications

1. Procédé mis en œuvre sur ordinateur de commande d'un outillage de labourage (104), comprenant :
la fourniture d'une carte (200) d'un champ ;
la définition d'une pluralité de limites (210, 212, 214, 216) sur la carte ;
la propulsion de l'outillage de labourage à travers le champ ; et
le réglage d'au moins un paramètre opérationnel de l'outillage de labourage lorsque l'outillage de labourage traverse l'une de la pluralité de limite ;
**caractérisé en ce que** la définition des limites (210, 212, 214, 216) sur la carte (200) comprend la définition des limites destinées à séparer des zones sur la base de l'altitude ou d'une caractéristique de sol.

2. Procédé selon la revendication 1, dans lequel la fourniture d'une carte (200) comprend la fourniture d'une carte topographique du champ.

3. Procédé selon la revendication 1, dans lequel la fourniture d'une carte (200) comprend la fourniture d'une carte de sol du champ.

4. Procédé selon l'une quelconque des revendications 1 à 3, dans lequel la fourniture d'une carte (200) comprend la fourniture d'une carte à un ordinateur (110) intégré sur un tracteur (102) configuré de manière à propulser l'outillage de labourage (104) à travers le champ.

5. Procédé selon la revendication 4, dans lequel le réglage d'au moins un paramètre opérationnel de l'outillage de labourage (104) comprend l'envoi d'un signal électronique à partir de l'ordinateur (110) vers l'outillage de labourage.

6. Procédé selon l'une quelconque des revendications 1 à 3, dans lequel la définition des limites (210, 212, 214, 216) sur la carte comprend la définition des limites de manière à séparer des zones (202, 204, 206, 208) sur la base de la propension à l'érosion.

7. Procédé selon l'une quelconque des revendications 1 à 3, dans lequel le réglage d'au moins un paramètre opérationnel de l'outillage de labourage (104) comprend le réglage d'une profondeur de l'outillage de labourage.

8. Procédé selon l'une quelconque des revendications 1 à 3, dans lequel le réglage d'au moins un paramètre opérationnel de l'outillage de labourage (104) comprend le réglage d'une agressivité de l'outillage de labourage.

9. Procédé selon l'une quelconque des revendications 1 à 3, dans lequel le réglage d'au moins un paramètre opérationnel de l'outillage de labourage (104) comprend le réglage d'une pression de panier roulant de l'outillage de labourage.

10. Procédé selon l'une quelconque des revendications 1 à 3, dans lequel le réglage d'au moins un paramètre opérationnel de l'outillage de labourage (104) comprend le réglage d'un angle de groupe de l'outillage de labourage.

11. Support de mémorisation non transitoire pouvant être lu par un ordinateur (402), le support de mémorisation pouvant être lu par un ordinateur comportant des instructions qui lorsqu'elles sont exécutées par un ordinateur (110) associé à un tracteur agricole (102), conduisent le tracteur agricole à :
propulser un outillage de labourage (104) à travers un champ ; et
régler au moins un paramètre opérationnel de l'outillage de labourage lorsque l'outillage de labourage traverse une limite (210, 212, 214, 216) définie sur une carte (200) ;
**caractérisé en ce que** la limite correspond à une caractéristique de sol ou à une altitude.

12. Support de mémorisation non transitoire pouvant être lu par un ordinateur (402) selon la revendication 11, comprenant, en outre, des limites (210, 212, 214, 216) basées sur des catégories de caractéristique de sol ou d'altitude.

13. Support de mémorisation non transitoire pouvant être lu par un ordinateur (402) selon la revendication 12, dans lequel au moins certaines des limites (210, 212, 214, 216) sont basées sur la propension à l'érosion.

14. Support de mémorisation non transitoire pouvant être lu par un ordinateur (402) selon la revendication 12, dans lequel au moins certaines des limites (210, 212, 214, 216) sont basées sur l'altitude.

15. Support de mémorisation non transitoire pouvant être lu par un ordinateur (402) selon l'une quelconque des revendications 11 à 14, dans lequel les instructions conduisent l'ordinateur (110) à régler au moins un paramètre opérationnel sélectionné à partir du groupe constitué par une profondeur de l'outillage de labourage (104), une agressivité de l'outillage de labourage, une pression de panier roulant de l'outillage de labourage et un angle de groupe de l'outillage de labourage.
